# EUROPEAN PATENT SPECIFICATION

(11) **EP 3 967 437 B1**
(45) Date of publication and mention of the grant of the patent: **04.12.2024**
(21) Application number: 20196295.8
(22) Date of filing: 15.09.2020
(51) Int. Cl.: B29C 65/00, B23K 13/02, B29C 65/36, H05B 6/06

(54) **INDUCTIVE WELDING OF WORKPIECES**
INDUKTIVES SCHWEISSEN VON WERKSTÜCKEN
SOUDAGE PAR INDUCTION DE PIÈCES

(43) Date of publication of application: 16.03.2022
(73) Proprietor: Corebon AB, 213 76 Malmö (SE)
(72) Inventor: FROGNER, Kenneth, 242 92 Hörby (SE)
(74) Representative: Ström & Gulliksson AB

(56) References cited:
- EP-A1- 0 852 452
- EP-A2- 1 343 355
- EP-B1- 1 343 355
- WO-A1-2019/231327
- WO-A1-82/02593
- US-A- 5 573 613

## Description

### FIELD OF THE INVENTION

The present invention relates to a system for controlled induction welding of at least one weld seam area of at least two surfaces of at least one workpiece. The present invention also relates to a method for induction welding at least two surfaces using this system.

### BACKGROUND

Over the past years, there has been an increasing interest in the use of lightweight materials in for instance the automotive and aerospace industry, where the main goal has been to reduce carbon emissions during transportation. For instance, it has been increasingly common that the vehicle or aircraft components are made of fiber composites. An emerging swap from thermoset resins to thermoplastic matrices allow the parts to be welded together, for example through induction welding.

There are several problems associated with induction welding of such materials, particularly when it comes to temperature measurement and control. For example, it is difficult to control the direction of the heat towards the weld zone without overheating or underheating parts of the workpiece, as well as knowing when to terminate the welding process. Moreover, it is difficult to measure the temperature of a weld zone without integrating sensors such as thermocouples, resistance thermometers or fiberoptical sensors, thereby interfering with and affecting the thermal and/or mechanical performance of the material. Thermocouples in particular might also be heated by the induction or disturbed by the electromagnetic fields, which can complicate accurate temperature readings.

Several attempts to avoid this type of interfering measures have been made, e.g. indirect measurement from for example pyrometers or other external temperature sensors, all of them having drawbacks such as being costly, inaccurate and requiring complex geometrical arrangements, without guaranteeing reproducibility in manufacturing. Examples of prior art can be found for instance in US5573613A, WO82/02593A1, EP1343355A2 and EP0852452A1. WO2019/231327A1 (see the preamble of claims 1, 13) discloses a method and a device for joining moulded parts by electromagnetic welding, whereby a sensing inductor is first moved along a contact plane of the parts to be moulded, followed by a joining inductor which performs the joining of the parts.

Thus, it is clear that there is a need for developing a new induction welding technique which can overcome the problems stated above.

### SUMMARY OF THE INVENTION

An object of the present invention is to solve or at least mitigate the problems related to prior art. This object is achieved by means of the technique set forth in the appended independent claims; preferred embodiments being defined in the related dependent claims.

According to an aspect of the invention, a system for controlled induction welding of at least one weld seam area of at least two surfaces of at least one workpiece is provided. The system comprises an inductor configured to be arranged in conjunction with the at least one workpiece, and a processing means configured to generate an electromagnetic field by applying an alternating voltage to the inductor so as to inductively heat the at least one of the surfaces so that the weld seam area is welded together. The processing means is also configured to simultaneously measure at least one parameter of the at least one workpiece, at least based on the generated electromagnetic field. The processing means is further configured to detect a change of the at least one parameter, and determine a temperature estimation of the at least one workpiece, based on said detected change.

Hence, the inductor acts both as a welding device and a sensing device. The inductor is thus configured to both heat the workpieces to cause welding and to act as a sensor simultaneously.

In one embodiment, the processing means is further configured to control, based on the determine temperature estimation, the operation of the system.

In one embodiment, the control of the operation of the system at least comprises altering the applied voltage and/or frequency, and/or causing a movement of the inductor.

In a one embodiment, the system further comprises a movement means configured to cause a movement of the inductor, and wherein the processing means is further configured to control the movement of the inductor.

In one embodiment, the system comprises a pressure means configured to apply a pressure to the system, and wherein the processing means is further configured to control the applied pressure.

In one embodiment, the pressure is applied in a direction substantially perpendicular to the weld seam area.

In one embodiment, the inductor and the processing means are in operable communication with each other.

In one embodiment, the processing means comprises a frequency converter.

In one embodiment, the processing means is further configured to provide a voltage/current with a certain frequency to the inductor.

In one embodiment, the at least one parameter measured by the processing means is at least one of frequency, a phase angle, a duty cycle, a resistance, an inductance, a peak, mean or root mean square (RMS) value of a current, a power, and/or energy.

In one embodiment, the estimation of temperature is performed by using at least one neural network being fed by the at least one parameter and/or using at least one transfer model being fed by the at least one parameter and/or by at least one autoregressive model being fed by at least two parameters.

The at least one workpiece is made of a composite material or carbon fiber reinforced plastics (CFRP).

Preferably, the matrix of the composite is a thermoplastic material or semi crystalline. The matrix material could also be a metal. Hence, there is a possibility for it to be remelted. Thus, the workpieces can be repaired when damaged, increasing recyclability and lifetime of the workpiece.

In one embodiment, at least one of the workpieces are made of carbon fiber reinforced plastics (CFRP). An advantage of using carbon fiber composites is that they are classified as semiconducting materials. Hence, they can be heated directly throughout the whole body of the workpiece. The at least one workpiece may also be fiberglass composites, or fiberglass reinforced plastics, with a thermoplastic matrix. Fiberglass is generally cheaper than carbon fiber. The fiber reinforcement can be any type of technical fiber such as flax fibers, aramid, ultra high molecular weight polyethylene UHMWPE. The composite can also be a hybrid fiber reinforced material, containing more than one fiber type, e.g. glass and carbon fiber. The fibers can be continuous or chopped, plain or woven layups or randomly oriented fibers. Different types of fibers and layups have their particular advantages, such as stiffness, density, cost, appearance, environmental impact, dielectric properties etc., obvious to a person skilled in the art.

In one embodiment, the weld seam area is defined by a first portion of a first workpiece arranged on or adjacent to and facing a second portion of a second workpiece. The workpieces might also belong to the same part, for example in the case of welding a tube together.

Advantages of this system is that it has a relatively low cost and a less complicated setup than prior art. No external temperature sensors need to be integrated inside the material to get the temperature of the weld zone, not seen in prior art. The system has a 2-in-1-principle where the inductor acts as both a temperature sensor and a heater. The processing means is configured to both generate an electromagnetic field and at the same time measure parameters of the at least one of the workpieces to determine the temperature. Even without external temperature sensors, the system can still run in a closed loop manner to ensure the proper temperature is reached, unlike open loop control, where the system relies on pre-determined settings, which works great in certain cases, but with a huge risk for over/under heating of the weld.

Another advantage of the claimed system is that a temperature deviation at the weld zone can be estimated during induction welding using only the inductor itself and a processing means, such as a frequency converter. There is no need to integrate for example thermocouples or fiber Bragg gratings into the structure to monitor the heating/welding process. In other words, the system provides for measurement of a hidden layer without mechanical interference with the material. This leads to for instance weight reduction and lower production cost during welding. The system is configured to measure differences in electromagnetic signals or properties in an inductor while at the same time heating the components to be welded, i.e. the workpieces, by the same inductor. Hence, the measurement of electromagnetic properties can be performed when the workpieces are both in a cooled state and a heated state. Welded joints provide large savings in component weight and assembly costs, but can only be applied if a reliable process can be guaranteed. Fiber composites loses a lot of its mechanical strength when holes are made, thus welded parts can be made significantly thinner, with maintained mechanical properties and reduced risk for fatigue.

Furthermore, the system provides for a controlled process with shorter cycle-times and ensures proper adhesion between the two workpieces due to improved temperature control and for instance the pressure means and appropriate welding time. The result is a high quality weld with reduced risk of locally overheating the material at the weld zone since the welding process is stopped by the processing means before the workpieces are overheated. The system also reduces the risk of insufficient temperature.

According to a second aspect, a method is provided for induction welding at least two surfaces of at least one workpiece using the system as described previously. The method comprises the steps of providing an inductor configured to be arranged in conjunction with the at least one workpiece, providing a processing means, generating an electromagnetic field by applying an alternating voltage to the inductor so as to inductively heat at least one of the surfaces so that the weld seam area is welded together, and simultaneously measuring at least one parameter of the at least one workpiece at least based on the generated electromagnetic field. The method further comprises detecting a change of the at least one parameter, and determining a temperature estimation of the at least one workpiece based on said detected change. In this context, in conjunction with is defined as electromagnetically coupled to.

In one embodiment, the method further comprises controlling the operation of the system based on said temperature estimation.

### BRIEF DESCRIPTION OF THE DRAWINGS

By way of example, embodiments of the present invention will now be described with reference to the accompanying drawings, in which:
Fig. 1 is a perspective view of a part of the system according to an embodiment,
Fig. 2a shows welding of two surfaces of two workpieces with an inductor according to one embodiment,
Fig. 2b shows welding of two surfaces of two workpieces with an inductor according to one embodiment,
Fig. 2c shows welding of two surfaces of two workpieces with an inductor according to one embodiment,
Fig. 3a is an isometric view of welding of two surfaces of one workpiece according to one embodiment,
Fig. 3b is a side view of welding of three surfaces of three workpieces according to one embodiment,
Fig. 4 is a schematic top view of an inductor according to an embodiment,
Fig. 5 is a side view of the system according to an embodiment,
Fig. 6 is a schematic block diagram showing the system and its elements,
Fig. 7 is a schematic block diagram showing parts of the system,
Fig. 8 is a diagram showing an example of the relationship between voltage and current when the system is above resonance,
Fig. 9a is a schematic view of a method of determining a temperature estimation based on neural network according to one embodiment.
Fig. 9b is a schematic view of a method of determining a temperature estimation based on transfer models according to one embodiment.
Fig. 9c is a schematic view of a method of determining a temperature estimation based on an autoregressive model with extra parameter input according to one embodiment.
Fig. 10a is a schematic block diagram of a method according to an embodiment, and
Fig. 10b shows a method performed by a processing means.

### DETAILED DESCRIPTION OF EMBODIMENTS

Embodiments of the invention will now be described with reference to the accompanying drawings. The invention may, however, be embodied in many different forms within the scope defined in the appended claims, and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

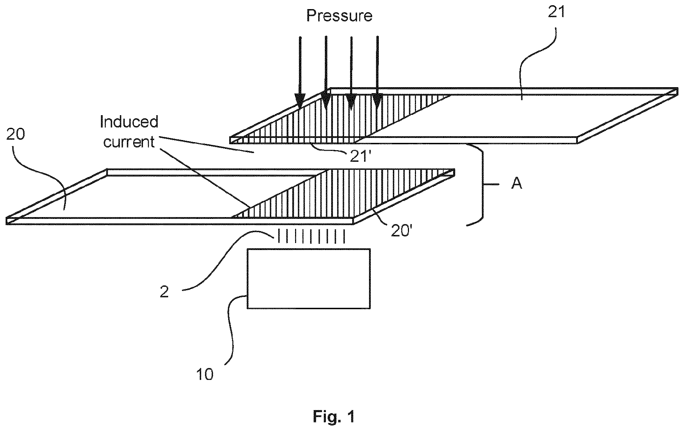

Fig. 1 illustrates a part of a system 1 according to the invention, where an object is to monitor changes in electrical signals to achieve a process temperature sufficient to weld at least two workpieces 20, 21 without overheating or underheating the materials, or workpieces, to be welded. The changes in electrical signals are characterized through inductive measurement. The inductive power 2 is caused by an inductor 10 that induces a current into the at least one workpiece 20, 21, as will soon be described more in detail.

In one embodiment, at least two surfaces of at least two workpieces 20, 21 are to be welded to each other. The at least two workpieces 20, 21 are configured to be inductively welded in a weld seam area A. The weld seam area A is defined by a first portion 20' of the first workpiece 20 arranged on or adjacent to, and facing, a second portion 21' of the second workpiece 21. The inductor 10 is arranged in conjunction with, or close to, at least one of the two workpieces 20, 21. In one embodiment, the two workpieces 20, 21 are arranged in conjunction with the inductor by being in direct contact with each other. In yet one embodiment, the two workpieces 20, 21 are arranged in conjunction with the inductor 10 without being in direct contact with each other. Hence, the at least one workpiece 20, 21 may be in direct contact or in indirect contact with the inductor 10. In one embodiment the inductor 10 is at a predetermined distance from the at least one workpiece 10, 20.

The inductor 10 induces a current in the workpieces 20, 21 which are susceptive to electromagnetic heating. They are inductively heated at the weld seam area A and are melted or fused together when they reach a predetermined melting or processing temperature corresponding to the material properties of the workpieces 20, 21. The time required for melting the workpieces 20, 21 at the weld seam area A is determined by the material properties and geometry of the respective workpieces.

In the embodiment shown in Fig. 1, the workpieces 20, 21 are to be welded when arranged on top of one another. Here, the second workpiece 21 is placed on top of the first workpiece 20 and the weld seam is generated in the weld seam area A on two respective end portions so that the two workpieces 20, 21 are welded in a side-to-side configuration. There are several variations to this arrangement. For instance, the second workpiece 21 may be arranged sideways in parallel with the first workpiece 20 so that they are welded in an edge-to-edge configuration. Other possibilities are for instance a side-to-edge configuration (not shown).

In the embodiment shown in Fig. 1, the workpieces 20, 21 are rectangularly shaped. However, as should be understood by a person skilled in the art, they may have any shape. For instance, they may be a beam and skin of an aircraft component. The thickness may vary from sub millimeter to tenths of millimeters and the workpieces to be welded may have complex geometries.

The workpieces 20, 21 are susceptors meaning that they have the ability to absorb electromagnetic energy and convert it to heat. Typically, they are carbon fiber composite materials such as carbon fiber reinforced plastics (CFRP). The fiber reinforcement can be any type of technical fiber such as flax fibers, aramid, ultra high molecular weight polyethylene UHMWPE. The composite can also be a hybrid fiber reinforced material, containing more than one fiber type, e.g. glass and carbon fiber. The fibers can be continuous or chopped, plain or woven layups or randomly oriented fibers. Different types of fibers and layups have their particular advantages, such as stiffness, density, cost, appearance, environmental impact, dielectric properties etc., obvious to a person skilled in the art.

The workpieces 20, 21 may for instance be made from unidirectional laminates where each layer is arranged with a different angle with respect to adjacent layers. As a non-limiting example, each workpiece may contain e.g. 10 layers of carbon fibers embedded in a thermoplastic matrix. Alternatively, the workpieces 20, 21 are made of a woven web of carbon fibers, for example chopped carbon fibers, organized or randomly oriented. Optionally, the web is nonwoven. The matrix may be for example polypropylene (PP), polyamide (PA), polycarbonate (PC) or it can be a semicrystalline thermoplastic material such as polyphenylenesulfide (PPS) or polyetereterketone (PEEK) etc., but it can also be a metal such as aluminum or titanium. Carbon fiber composites are usually classified as semiconductors and can be directly heated efficient at distributing heat throughout the material thickness. Due to the thermoplastic matrix, it is possible to melt the workpieces 20, 21 and thereby create a weld seam in a weld seam area A shared by the two workpieces 20, 21.

The workpieces 20, 21 may also be fiberglass composite materials. The fibers can also be of any other technical textile, such as flax fibers, aramid, ultra-high molecular weight polyethylene, etc. As a non-limiting example, glass fibers may be used as a reinforcement agent in a polypropylene based matrix. If the workpieces 20, 21 to be welded are fiberglass composites, one may need to introduce an additional layer (not shown) in an interface between the two workpieces. This is due to the insulating properties of fiberglass. The additional layer placed in the interface may also be called a susceptor. This susceptor may be for instance a woven web of metal or carbon fiber. The webs constituting the additional layer may also be nonwoven. It may also be that the additional layer is something else than a web. For instance, the additional layer may be randomly oriented carbon fibers applied to the surface of one or both of the workpieces 20, 21 to be welded.

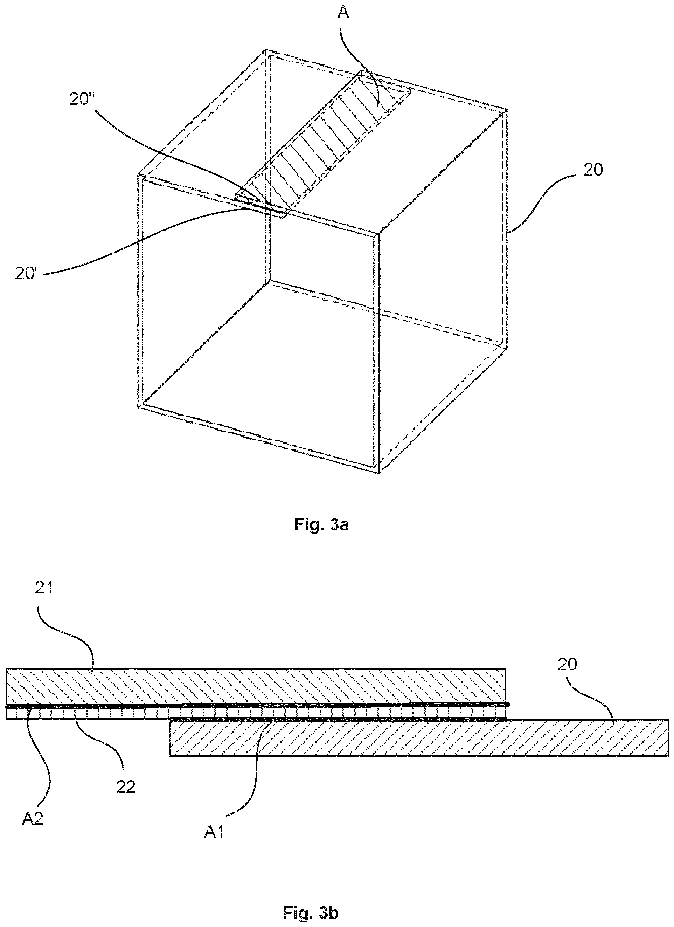

It should be noted that the two workpieces 20, 21 may be of different material. Hence, the first workpiece 20,21 may be of a first material and the second workpiece may be of a second material. In the embodiment described above, one workpiece may be made of a fiberglass composite material and one workpiece is a susceptor. The composite materials can also be built by hybrid fiber reinforcement, for example glass fiber and carbon fiber, typically with the carbon fiber at least at the surface or close to the surface of the material. This is shown in Fig. 3b.

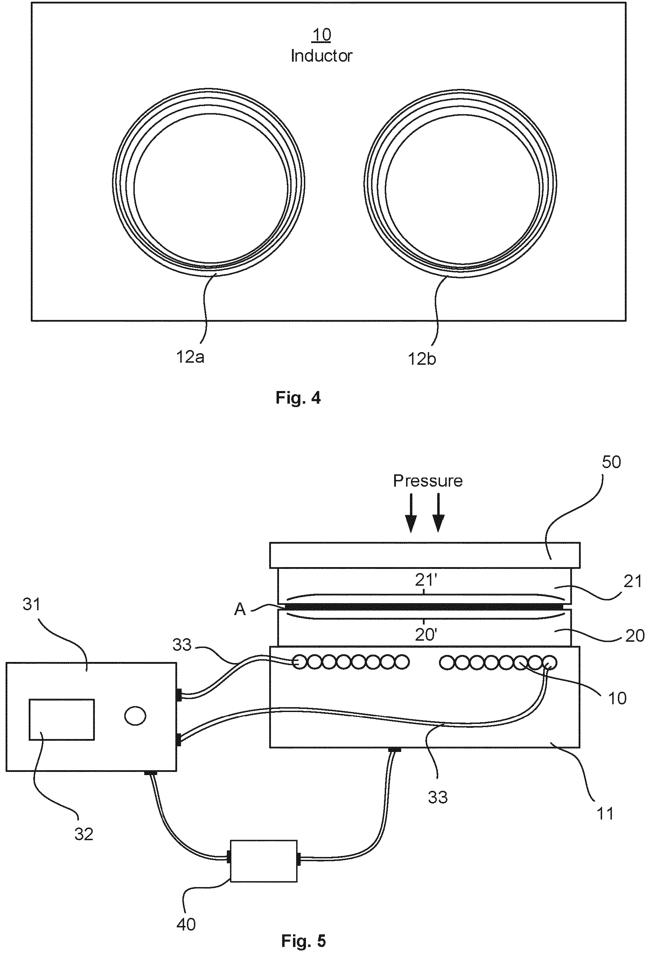

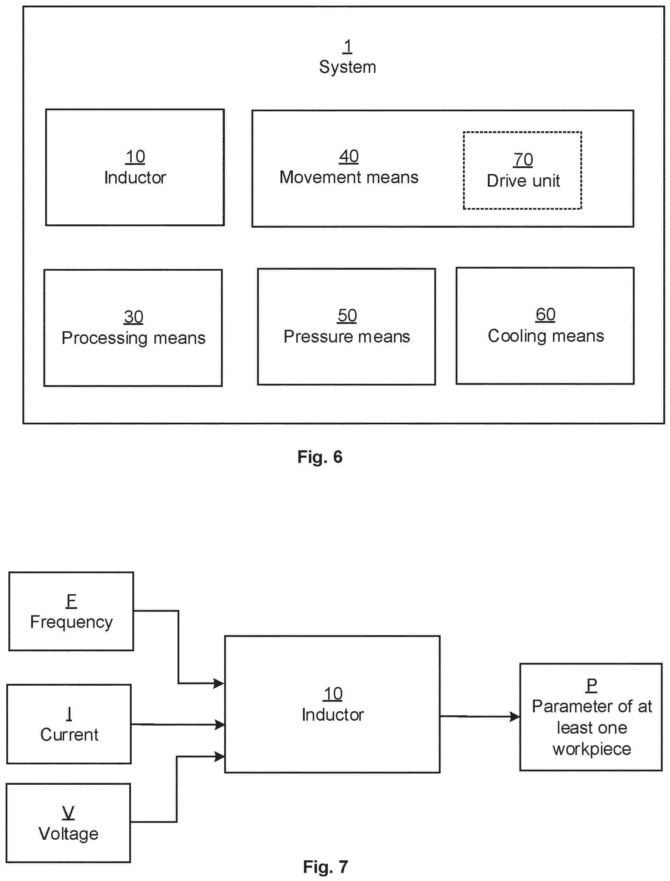

In Fig. 1, a pressure is applied to the workpieces 20, 21 to ensure good contact between the two workpieces to be joined. The pressure may be applied through pressure means 50, as shown and discussed more in relation to Figs. 5 and 6.

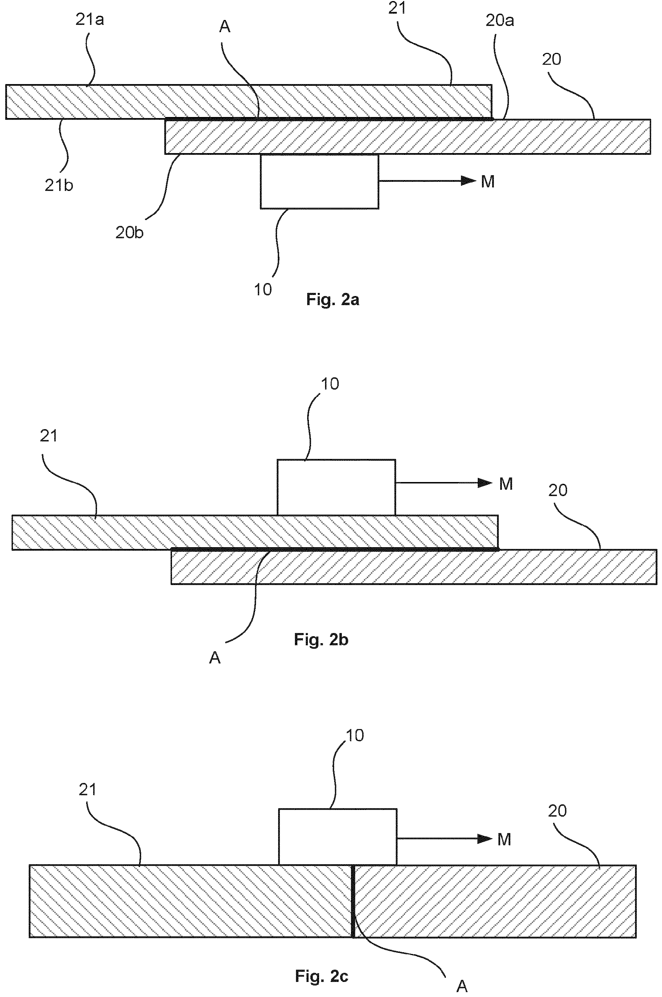

Figs 2a-c illustrate three different situations where the inductor 10 is moved in relation to the workpieces 20, 21. The arrows indicate the directional movement. In Fig. 2a, the second workpiece 21 is arranged on top of the first workpiece 20 and the weld seam is generated in the weld seam area A defined by the area between the two workieces in which they overlap, i.e where a first portion 20' of the first workpiece 20 is facing a second portion 21' of the second workpiece 21. Here, the workpieces are welded in a side-to-side configuration.

The first workpiece 20 comprises a first surface 20a and a second surface 20b. The second workpiece 21 comprises a first surface 21a and a second surface 21b. In the embodiment shown in Fig. 2a, the second workpiece 21 is arranged on top of the first workpiece 20. The second surface 21b of the second workpiece 21 is arranged facing the first surface 20a of the first workpiece 20. The inductor 10 is arranged below the second surface 20b of the first workpiece 20 so as to indirectly heat the first surface 20a of the first workpiece 20 and the second surface 21b of the second workpiece 21.

In Fig. 2b, the workpieces 20, 21 are welded in a side-to-side configuration but with the inductor arranged and moving on top of the second workpiece 21.

In Fig. 2c, the second workpiece 21 is be arranged sideways in parallel with the first workpiece 20 so that they are welded in an edge-to-edge configuration. Here, the inductor 10 is arranged and configured to be moved along both the first workpiece 20 and the second workpiece 21. Alternatively, the inductor 10 may be placed on the opposite side (underneath) the two workpieces 20, 21.

In all cases, the workpieces 20, 21 may be supported by a support element (not shown). The support element may be arranged opposite the pressure means 50 such that the workpieces 20, 21 are be sandwiched between the pressure means 50 and the support element. Alternatively, the workpieces 20, 21 may be supported mainly by the supporting force generated by the pressure coming from the pressure means 50 when acting in a direction towards the inductor 10 in its housing 11. In that case, the support means may be the inductor housing 11.

As shown in Figs. 2a-c, the movement of at least a part of the inductor 10 may be in the lengthwise direction illustrated by the arrow M. The direction may for instance be along the x-axis. Alternatively, the movement is in a direction along the length of the two workpieces 20, 21 while lying on a surface or tool. However, as should be understood, the movement of the inductor 10 could be along the width of the two workpieces 20, 21 (only a cross-sectional side view is shown in Figs 2a-c) while lying on a surface or tool. Although not shown, it should be realized that the movement could be in multiple directions in a single embodiment as well, as long as the inductor 10 is close to the at least one workpiece 20, 21. Preferably, the translational movement of the inductor 10 is actuated by a movement means 40. This will be further discussed in relation to Fig. 5 and 6.

In the embodiments described above, welding has been described as welding of two surfaces of two workpieces 20, 21. However, as should be understood by a person skilled in the art, two surfaces of one single workpiece 20, 21 could also be welded together. This is shown in Fig. 3a where the two surfaces 20', 20" of the workpiece 20 have been welded together in a weld seam area A. In such a situation, the workpiece may have been bent so as to create a shape where two end portions 20', 20" meet. The workpiece 20, 21 may be bent and welded in the shape of a metal profile with four corners and having a quadratic cross-section. Several other shapes may also be provided, such as a pipe-like shape with a circular cross-section. In these cases, the workpiece 20, 21 has two end portions, forming surfaces 20', 20", where the weld is created in a weld seam area A between two end portions of the same blank. Put differently, a single blank made of carbon fiber and/or fiberglass composite may be welded together.

Fig. 3b shows an embodiment where surfaces of three workpieces 20, 21, 22 are welded together. This may be the case when the two of the workpieces 20, 21 are fiberglass composite materials. In order to weld these workpieces 20, 21 together, an additional workpiece 22 is introduced. Such additional workpiece 22 have been discussed above, where it was referred to as a susceptor. The additional workpiece 22 may be of the same size as the workpieces 20,21 or may be smaller.

In this configuration, two weld seam areas A1, A2 are created. One weld seam area A1 is created between the first workpiece 20 and the additional workpiece 22, and one weld seam area A2 is created between the second workpiece 21 and the additional workpiece 22.

Fig. 4 is an illustrative top view of a conductor. The inductor 10 comprises at least one coil 12a, 12b. In one embodiment the inductor 10 comprises at least two coils 12a, 13b. In this configuration one coil may be designated to measure, whereas the one or more additional coils are configured to heat. If a plurality of coils are present in the inductor 10, the coils are electromagnetic mutually coupled to each other.

In one alternative embodiment the inductor 10 comprises one single coil. The single coil is thus configured to both cause the heating of the workpieces as well as measuring the parameters of the system.

The system 1 for controlled induction welding of at least one weld seam area A of the at least two workpieces 20, 21 is further illustrated in Fig. 5. Here, the weld seam created in the weld seam area A is shown as a black line between two workpieces 20, 21. The system 1 is seen from a side view. A pressure means 50 is provided to apply a pressure to the system 1, and more specifically to the at least two workpieces 20, 21 to ensure good contact between the workpieces during welding.

The inductor 10 may be arranged in a housing 11. A purpose of the housing 11 is to protect the inductor 10 from coming into contact with the workpieces 20, 21 to be welded. Another purpose is to provide a stable ground for the inductor to be supported for instance by a table in a workspace. Yet another purpose of the inductor housing 11 is to support the workpieces 20, 21 during welding so that they experience proper contact between the pressure means 50 and the inductor 10. This ensures a stable and controlled welding process. The inductor housing 11 also facilitates controlled and stabilized movement of the inductor 10 when it is to be moved. The housing may also prevent the coil from heating undesired objects in close proximity. Other than coil unit, another word for the inductor 10 may be heating element.

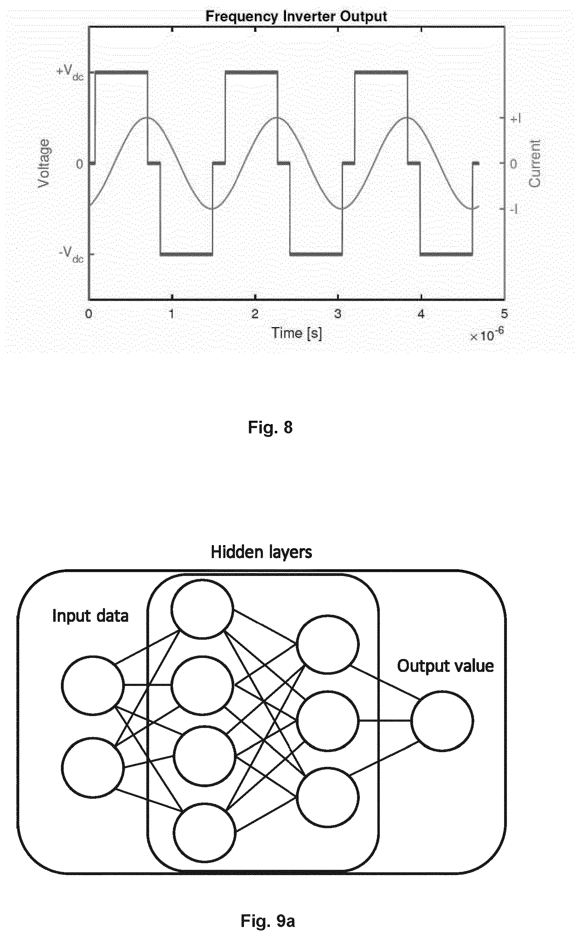

The system 1 also comprises a processing means 30 which is configured to generate an electromagnetic field by applying an alternating voltage to the inductor 10 so as to inductively heat the two workpieces 20, 21 so that the weld seam area A is welded together. Simultaneously, the processing means 30 is configured to measure at least one parameter P of at least one of the two workpieces 20, 21 at least based on the generated electromagnetic field. The processing means 30 is configured to detect a change of the at least one parameter P. Based on said change, the processing means is further configured to determine a temperature estimation of the at least one temperature of the workpiece 20,21. The temperature estimation will be discussed more in reference with Figs. 9a-c.

Preferably, the processing means 30 is or comprises a frequency converter 31. It can also be a control unit. The processing means 30 may further comprise a display unit 32 to provide an operator or user with process information, and coupling means 33 so that the processing means 30 is in operative communication with the inductor 10. Movement means 40 is also provided and operatively coupled to both the processing means 30 and the inductor 10. The movement means 40 is configured to cause a movement of the inductor 10 based on process information received and/or determined by the processing means 30. In other words, the processing means 30 is configured to control the movement of the inductor 10. Alternatively, the inductor 10 is stationary and the movement means 40 is configured to move the workpieces 20, 21 in relation to the inductor 10.

Preferably, the processing means further comprises an interface for transmitting the data obtained by inductor. The interface may be of any suitable type, including simple wiring, a serial interface such as Ethernet, RS485, USB, a wireless interface such as Bluetooth or WiFi, etc.

The processing means may comprise a programmable device, such as a microcontroller, central processing unit (CPU), digital signal processor (DSP) or field-programmable gate array (FPGA), discrete digital synthesizer (DDS) with appropriate software and/or firmware, and/or dedicated hardware such as an application-specific integrated circuit (ASIC). The processing means 30 can be connected to or comprises a computer readable storage medium such as a disk or memory. The memory may be implemented using any commonly known technology for computer-readable memories such as ROM, RAM, SRAM, DRAM, FLASH, DDR, SDRAM or some other memory technology.

Fig. 6 discloses an embodiment of the system 1. Here, the system 1 comprises an inductor 10 and a processing means 30 as has previously been described. The system 1 may further comprise one or more of a movement means 40, pressure means 50 and a cooling means 60.

The movement means 40 is configured to move the inductor 10 relative to the workpieces 20, 21 to be welded. The movement means 40 may be in operative communication with the processing unit 30 and in operative communication with a drive unit 70 that causes the movement of the inductor 10. The drive unit 70 may be part of the movement means 40, or be arranged externally of the movement means. The drive unit 70 may be a motor such as an electrical motor or pneumatic actuator or similar. Alternatively, the drive unit 70 can be a brushless DC electric motor. The brushless DC electric motor may be a stepper motor. A stepper motor divides a full rotation into a number of equal steps. A benefit with a stepper motor is that it is possible to move and hold at one of these steps without having a position sensor for feedback. The drive unit could also be any type of servo motor.

The processing means 30 may instruct the drive unit 70 to move the inductor 10 along a predetermined path in small steps. The steps are preferably in the sub-millimeter scale. The drive unit 70 can be controlled wirelessly by the processing means 30 or by wire or fiber optic. The drive unit 70 may be configured to follow a predefined protocol stored in an associated memory to the processing means 30, and/or the drive unit 70 is configured to follow instructions caused by a user of the processing means 30. The drive unit 70 may be arranged as a part of the system 1 or as a separate external part, being in operative communication with the system 1.

Optionally, the movement means 40 may be a part of the processing means 30, or arranged externally of the processing unit 30.

The movement means 40 may for example comprise a track, frame, a rod or similar arrangement that allows the movement to be controlled in a precise manner. The movement means 40 may further be a robotic arm, parallel kinematic robot or gantry. Preferably, the movement means 40 can move in incremental steps to better control the welding process. The movement means 40 can also move continuously. The movement means 40 may also be manually driven. For instance, the movement means 40 may be arranged in a housing, for example a longitudinal arrangement along which it can move, not shown) for allowing the movement of the inductor 10.

The movement means 40 may in one embodiment comprise a telescopic arm that is able to be lengthened or shortened during welding so as to allow for different positions of the inductor 10.

As previously stated, the system 1 may comprise cooling means 60 configured to cool down the system 1. The cooling means 60 is configured to cool the workpieces 20, 21 during and/or after having reached the processing temperature and the weld has been formed. The cooling can be controlled by the processing means 30. If for instance the welding process is continuous, the system 1 may comprise a roller or cooling cylinder configured to cool the welded area. This roller or cooling cylinder may then be arranged behind the inductor 10 as it moves across the workpieces 20, 21. Alternatively, the inductor 10 may chill the newly welded area through a process called thermal conduction. In that case, there may be for instance a suction element arranged in conjunction with the system 1 to retrieve the energy loss associated with the cooling process.

The system 1 further comprises a pressure means 50 configured to apply a pressure to the workpieces 20, 21. In Fig. 5, the inductor 10 is arranged underneath the two workpieces 20, 21 and the workpieces are sandwhiched between the pressure means 50 and the inductor 10. In general, the pressure means 50 and the inductor 10 are arranged on respective sides of the two workpieces 20, 21 to be welded and follow each other across the areas to be welded. The inductor 10 and the pressure means 50 may as well be arranged on the opposite sides. This is shown in Figs 2b and 2c where that the inductor 10 is arranged on top of the second workpiece 21 and the pressure means 50 is arranged to contact the first workpiece 20.

The processing means 30 is configured to control the applied pressure. Typically, the pressure is applied in a direction substantially perpendicular to the weld seam area A of the at least two workpieces 20, 21. This is illustrated in Figs 1 and 3.

Now turning to Fig. 7, illustrating further parts of the system 1. In Fig. 7, a part of the process of measuring at least one parameter P is shown. Here, a frequency F, a current I and a voltage V serves as input to the inductor which in turn delivers a parameter P of the at least two workpieces 20, 21 as output to the processing means 30. The frequency F, current I and voltage V are all examples of signals initially provided as input by the processing means 30.

In operation, the workpieces 20, 21 are inductively heated by the inductor 10 which receives certain electromagnetic signals from the processing means 30 as input in terms of a voltage V/current I with a certain frequency F. The frequency of at least one of these signals (power output) can be either constant or ramped up. Concurrently, as the inductor 10 heats the workpieces 20, 21 to weld them in a weld seam area A, electromagnetic signals, or parameters P, of the workpieces 20, 21 are sensed by the inductor 10. The parameters P are transmitted back to the processing means 30 via the inductor 10. The processing means 30 is configured to measure the at least one parameter P and detect/assess a change in the at least one parameter P. Put differently, the processing means 30 is configured to evaluate the at least one parameter P by comparing it with predetermined reference values.

The predetermined reference values may be obtained through system modelling/identification or from an AI model. The values are typically calculated from previous input data. The predetermined reference values may for instance be material characteristics of the workpieces 20, 21 to be welded.

The processing means 30 is also configured to control the operation of the system 1 based on this evaluation of changes in at least one parameter P. When the processing means 30 determines, based on the measured parameters P, that the appropriate welding temperature has been reached at the weld seam area A, the welding process is changed. The welding process may be changed by stopping or altering the welding process, for instance by maintaining the temperature or moving the inductor 10 through the movement means 40 and/or by cooling the weld seam area A through the cooling means 60. Other examples are for instance by altering the applied voltage and or frequency or the applied pressure given by the pressure means 50. All of these actions/events are preferably determined by the processing means 30

In other words, the system 1 functions as follows. The movement means 40 moving either the workpieces 20, 21 or the inductor 10 is controlled, via the processing means 30, based on output from the inductor 10. This output comes in the shape of electromagnetic signals or parameters P resulting from changes in material characteristics of the workpieces 20, 21 to be welded. Moreover, the pressure means 50 is controlled, via the processing means 30, based on the output from the inductor 10. Further, the cooling means 60 is controlled, again via the processing means 30, based on output from the inductor 10. Lastly, the output, or directives, coming from the processing means 30 is in turn determined based on output from the inductor 10. One can see this interaction as a type of feedback system.

As previously mentioned, the processing means 30 is configured to generate an electromagnetic field by applying input signals to the inductor 10 in terms of a voltage V/current I with a certain frequency F. These signals may be for instance a frequency F, a current I or an input voltage V, as illustrated in Fig. 7. As the workpieces 20, 21 are inductively heated and the electromagnetic properties of the workpieces are altered, the inductor 10 will experience a change in electromagnetic signals in comparison with the input values generated by the processing means 30. These changes in electromagnetic signals, or parameters P, arising due to the heating of the workpieces, are transmitted through the inductor 10 and detected by the processing means 30. For instance, the at least one parameter P measured by the processing means 30, or frequency converter, is at least one of frequency, a phase angle between a voltage and a current, a duty cycle, a resistance, an inductance, peak, mean or a root mean square (RMS) value or similar of a current, a power, and/or energy. An alternative to measuring the phase angle is to measure other electrical signals that give rise to the same phase shift, for example change in resonance frequency.

During welding, the impedance of the inductor changes due to changes of electrical properties, or parameters P, in the workpieces 20, 21. By measuring a difference in for instance resistance and inductance in the presence and absence of the workpiece, respectively, one can obtain an indication of a temperature variation at the weld seam area A. The electric circuit provided in the system 1 may have an oscillating behavior which is pronounced at a certain resonance frequency, at which the impedance is purely resistive. The phase angle can be described as the shift between a voltage and a current. At resonance, the phase angle is zero. In Fig. 8, the output from the frequency converter is illustrated as the system 1 gets closer to resonance. As can be seen, the output voltage is similar to a modified square wave. Conversely, at resonance the current resembles a sinusoidal.

The pressure applied by the pressure means 50 to the workpieces 20, 21 to ensure proper contact between the two workpieces 20, 21 during welding affects both the resistance and the inductance the coil is experiencing.

Other than detecting changes in the at least one parameter P, the processing means 30 is configured to evaluate the at least one parameter P by comparing it against predetermined reference values, which may for instance be input values that have been determined previously, based on simulated data, system modelling or AI., as will soon be described in detail. The value might depend on previous values. Furthermore, the processing means 30 is configured to control the operation of the system 1 based on this evaluation, for instance by altering the applied voltage, and/or causing a movement of the inductor 10. Other than applying an alternating voltage, the processing means 30 is further configured to provide a current I and/or a frequency F to the inductor 10 as an input signal.

Knowing for instance the phase angle and the output frequency, one can estimate the temperature in the weld seam area A by comparing the values sensed by the inductor 10 with predetermined reference values obtained using a system model or AI. The parameters P, or electrical signals, mentioned previously are detected and measured by the frequency converter to be able to estimate the temperature at the weld seam area A, i.e. a weld zone. Initial values can vary depending on local material properties, geometry, thickness, etc, but the melting of the matrix material typically cause a change in the response, possible to detect, which is beneficial to accurate modelling the temperature close to and around the target/processing temperature.

By measuring these parameters P and estimate the temperature, the process of welding can be controlled since the system 1 will know when the appropriate process temperature has been reached at the weld seam area A, i.e. in an interface between the workpieces 20, 21. When the process temperature has been reached, an indication that the workpieces 20, 21 have been sufficiently melted will reach the processing means 30. The movement means 40 will receive an input signal from the processing means 30 to move in relation to the present weld seam area A of the at least two workpieces 20, 21. The pressure means 50 may follow the movement of the inductor 10. Potential dwell time can also be integrated in the control means if needed.

In an alternative embodiment, the inductor 10 and the pressure means 50 are held stationary and the workpieces 20, 21 are moved instead. Moreover, the pressure can be varied based on the measured parameters P. When the system 1 has determined that the workpieces 20, 21 have been appropriately welded at a certain area, the pressure means 50 receives input from the processing means 30 which controls the pressure means 50, which indicates whether the pressure means 50 can stop applying pressure or not.

Figs. 9a-c illustrates alternative ways of estimating the temperature. The processing means 30 is configured to determine a temperature estimation based on the detected change in parameter(s). The temperature estimation may be based on a neural network, one or more transfer functions, and/or autoregressive model(s). The temperature estimation is based on evaluating the changes in the at least one parameter.

The estimation of the temperature can be performed by a neural network, fed by at least one parameter P. The neural network needs to be trained by vast amount of data to be able to estimate the temperature accurately. The neural network is a good way of implementing a self-learning algorithm in the processing means. The estimation of the temperature in the weld zone can alternatively be performed by using a transfer function model of any type, fed by at least one parameter P. Yet another alternative to estimate the temperature can performed by using an autoregressive model of any type, fed with at least one extra parameter P. All methods are determined by previously recorded data in combination with changes in at least one of the parameters P.

Fig. 9a is a schematic view of a neural network. In one embodiment, the estimation of the temperature of the at least one surface is obtained through a neural network, where at least one of the parameters P is fed into the model. The specific parameters of the model or neural network can change over time through self-learning algorithms associated with this type om models.

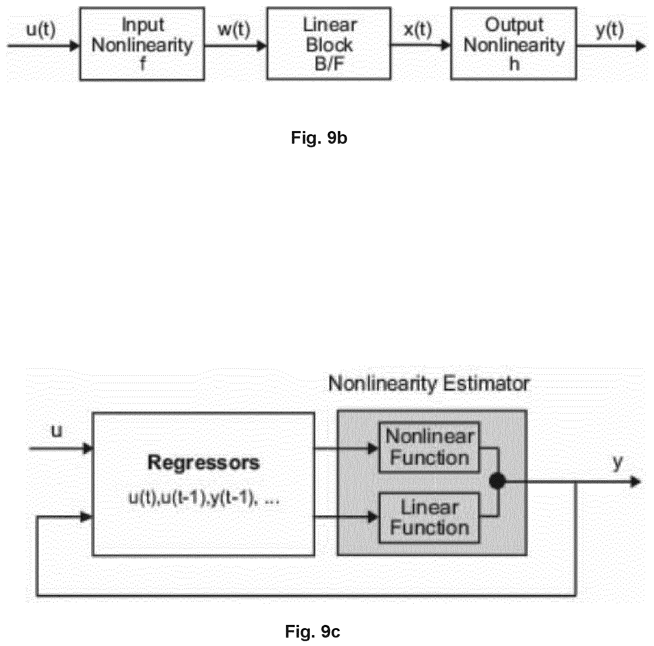

Fig. 9b is a schematic view of a transfer model structure. In one embodiment, the estimation of the temperature of the at least one surface is obtained through one or several transfer models, fed by at least one parameter P, typically at least one non-linear function is needed for accurate results.

Fig. 9c is a schematic view of regressive model. In one embodiment, the estimation of the temperature of the at least one surface is obtained through an autoregressive model, fed with at least one extra parameter P, typically at least one non-linear function is needed for accurate results. In this embodiment the regressive model is a non-linear ARX model. The structure of such a models enables models of complex nonlinear behavior using flexible nonlinear functions, such as wavelet and sigmoid networks. A nonlinear ARX model consists of model regressors and a nonlinearity estimator. The nonlinearity estimator preferably comprises both linear and nonlinear functions that act on the model regressors to give the model output.

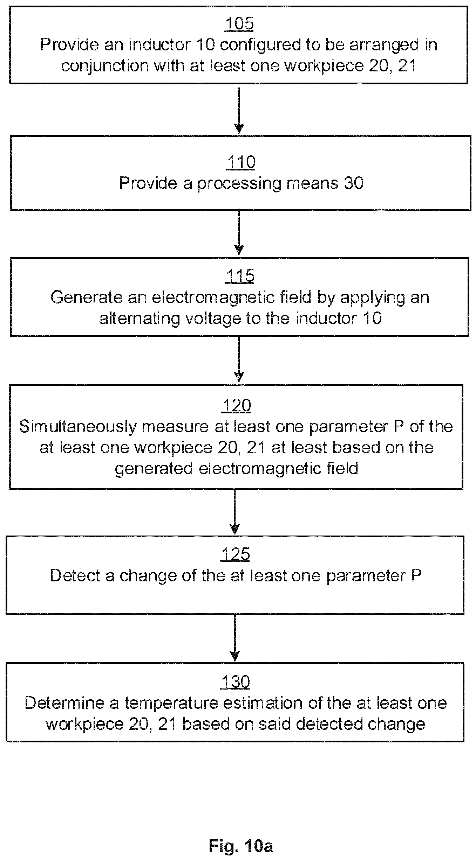

Fig. 10a illustrates a method 100 for induction welding at least two workpieces 20, 21 using the system 1 as described above. The method begins by providing 105 an inductor 10 configured to be arranged in conjunction with at least one of the workpieces 20, 21. A processing means 30 is also provided 110. An alternating voltage is applied to the inductor 10 by the processing means 30 and thereby generates an electromagnetic field. The aim is to inductively heat the at least two workpieces 20, 21 so that a weld seam is created in a weld seam area A between the two workpieces 20, 21. The alternating voltage V is an input signal to the inductor 10 and is applied via the processing means 30. However, the method is not restricted to applying solely an input voltage to the inductor 10. Other electromagnetic signals are applicable as well, such as a current I or a frequency F. Simultaneously as the inductor 10 heats the workpieces 20, 21 through the generated electromagnetic field, the inductor 10 senses and the processing means 30 measures 120 at least one parameter P of at least one of the two workpieces 20, 21 at least based on the generated electromagnetic field. The parameter P (an electromagnetic signal) is altered when the workpieces 20, 21 are subjected to the electromagnetic field. This is due to changes in the material characteristics of the workpieces 20, 21 during welding. The processing means 30 is configured to detect 125 a change of the at least one parameter. One a change in the parameter is detected, the processing means 30 is configured to determine 130 a temperature estimation of the at least one workpiece based on said change. Hence, the processing means 30 is configured to determine a temperature estimation of the at least one workpiece 20, 21 by measuring a change of at least one parameter P of the at least one workpiece 20, 21 caused by the generated electromagnetic field.

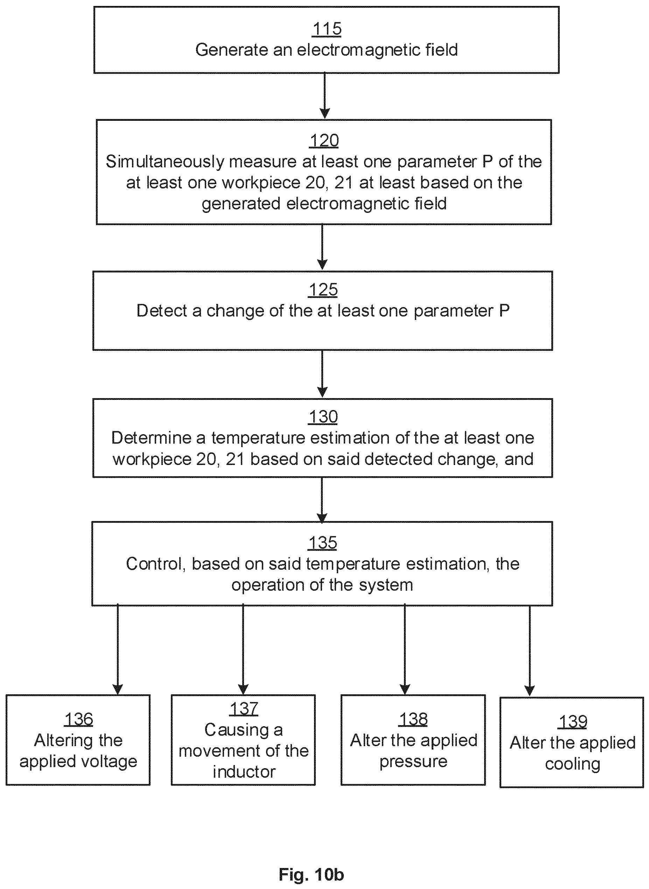

Fig. 10b illustrates the particular involvement and operation of the processing means 30 in the system 1 as described previously. As already mentioned, the processing means 30 generates 115 an electromagnetic field in the workpieces 20, 21 by means of the inductor 10. Simultaneously, as the electromagnetic field is generated and the workpieces 20, 21 are heated in the weld seam area A where a weld seam is created, the processing means 30 measures 120 at least one parameter P of at least one of the workpiece(s) 20, 21. Due to changes in the material characteristics of the workpiece(s) 20, 21 during welding, the parameter P is altered when the workpieces 20, 21 are subjected to the electromagnetic field (the induced current from the inductor 10).

The inductor 10 affect the parameter P and transmits the one or more signals to the processing means 30. The processing means 30 detects 125 a change of the at least one parameter P and evaluates this at least one parameter P, or signal. The detected change of parameter(s) are used to determine 130 a temperature estimation of the temperature of the at least one workpiece 20, 21.

Based on the determined 130 temperature estimation, the processing means 30 controls 135 the operation of the system 1. This may be done in one or more of the following ways; by altering 136 the applied voltage V, causing a movement 137 of the inductor 10 through the movement means 40, altering the applied pressure 138 through the pressure means 50, and altering 139 the applied cooling through the cooling means 60, or a combination thereof. In one embodiment, the current is altered based on the estimated temperature. If the processing means 30 determines that the temperature is rising, the current is lowered. On the contrary, if it is determined that the temperature is decreasing, the current is increased.

The time it takes to reach the appropriate process temperature may vary between different materials, geometrics and/or their thickness. The process temperature may for example be in the range of 180°C and 440 °C, but can also be higher. Therefore, feedback may be used to provide for accurate weld zone temperature estimation. Further, the temperature profile of the workpieces 20, 21 may be useful to avoid thermal degradation of the polymer in the layers which are closest to the inductor 10. The welding process may be performed for instance by spot welding where the workpieces 20, 21 are pressed and heated momentarily. Alternatively, the method of welding may be performed by a continuous process or by a step-wise static process. In the latter case, the weld seam of the weld seam area A could be for instance 200 mm long, followed by a movement of the inductor about 180 mm before creating the next weld seam of 200 mm. In this case, there would be some overlapping between the weld seams.

An advantage of the system claimed in this inventive concept is that it is non-invasive in a sense that it does not leave residues from the heating process inside the weld seam area A. Such residues may be thermocouples or fiber Bragg gratings for temperature measurement. When the heating is performed at the weld seam area, the weld seam is solely comprised of melted thermoplastic material from the matrix surrounding the carbon fibers.

## Claims

1. A system for controlled induction welding of at least one weld seam area (A) of at least two surfaces of at least one workpiece (20, 21, 22) made of a carbon fiber composite material or carbon fiber reinforced plastics (CFRP), the system comprising:
an inductor (10) configured to be arranged in conjunction with the at least one workpiece (20, 21, 22) so that the inductor (10) is electromagnetically coupled to the at least one workpiece (20, 21, 22),
a processing means (30) configured to:
generate an electromagnetic field by applying an alternating voltage to the inductor (10) so as to inductively heat at least one of the surfaces so that the weld seam area (A; A1, A2) is welded together,
**characterised in that**
the processing means (30) is also configured to simultaneously as the inductor (10) heats the at least one workpiece (20, 21, 22) to a process temperature through the generated electromagnetic field, measure at least one parameter (P) of the at least one workpiece (20, 21, 22) at least based on the generated electromagnetic field,
detect a change of the at least one parameter (P), and
determine a temperature estimation of the at least one workpiece (20, 21, 22) based on said detected change of the at least one parameter (P).

2. The system according to claim 1, wherein the processing means (30) is further configured to control, based on said determined temperature estimation, the operation of the system.

3. The system according to claim 2, wherein the control of the operation of the system at least comprises altering the applied voltage, altering the frequency and/or causing a movement of the inductor (10).

4. The system according to any preceding claims, wherein the system further comprises a movement means (40) configured to cause a movement of the inductor (10), and wherein the processing means (30) is further configured to control the movement of the inductor (10).

5. The system according to any preceding claims, further comprising a pressure means (50) configured to apply a pressure to the system, and wherein the processing means (30) is further configured to control the applied pressure.

6. The system according to any preceding claims, wherein the processing means (30) is configured to determine the temperature estimation by:
using at least one neural network being fed by the at least one parameter (P), and/or
using at least one transfer function model being fed by the at least one parameter (P), and/or
using at least one autoregressive model being fed with at least two parameters (P).

7. The system according to any preceding claims, wherein the processing means (30) is in operative communication with the inductor (10).

8. The system according to any preceding claims, wherein the processing means (30) comprises a frequency converter (31).

9. The system according to any preceding claims, wherein the processing means (30) is further configured to provide a voltage/current with a certain frequency to the inductor (10).

10. The system according to any preceding claims, wherein the at least one parameter (P) measured by the processing means (30) is at least one of a frequency, a phase angle, a duty cycle, a resistance, an inductance, a peak, mean or root mean square (RMS) value of a current, a power, and/or energy.

11. The system according to any preceding claims, wherein the inductor (10) comprises one single coil.

12. The system according to any of the claims 1-10, wherein the inductor (10) comprises a plurality of coils being electromagnetically coupled to each other.

13. A method (100) for induction welding at least two surfaces of at least one workpiece (20, 21, 22) using the system as defined in any one of the preceding claims, comprising the steps of:
providing (105) an inductor (10) configured to be arranged in conjunction with the at least one workpiece (20, 21, 22) so that the inductor (10) is electromagnetically coupled to the at least one workpiece (20, 21, 22),
providing (110) a processing means (30),
generating (115) an electromagnetic field by applying an alternating voltage to the inductor (10) so as to inductively heat at least one of the surfaces so that the weld seam area (A; A1, A2) is welded together, and **characterised in that**
simultaneously as the inductor (10) heats the at least one workpiece (20, 21, 22) to a process temperature through the generated electromagnetic field, measuring (120) a change of at least one parameter (P) of the at least one workpiece (20, 21, 22) at least based on the generated electromagnetic field,
detecting a change of the at least one parameter (P), and
determining a temperature estimation of the at least one workpiece (20, 21, 22) based on said detected change,
wherein the at least one workpiece (20, 21, 22) is made of a carbon fiber composite material or carbon fiber reinforced plastics (CFRP).

## Patentansprüche

1. System zum kontrollierten Induktionsschweißen von mindestens einem Schweißnahtbereich (A) von mindestens zwei Flächen von mindestens einem Werkstück (20, 21, 22) aus einem Kohlefaserverbundwerkstoff oder carbonfaserverstärktem Kunststoff (CFK), wobei das System aufweist:
ein Induktor (10), der dazu ausgebildet ist, in Verbindung mit dem mindestens einen Werkstück (20, 21, 22) derart angeordnet zu sein, dass der Induktor (10) elektromagnetisch mit mindestens einem Werkstück (20, 21, 22) gekoppelt ist,
ein Verarbeitungsmittel (30), das dazu ausgebildet:
ein elektromagnetisches Felds durch Anlegen einer Wechselspannung an den Induktor (10) zu erzeugen, um mindestens eine der Flächen induktiv derart zu erwärmen, dass der Schweißnahtbereich (A; A1, A2) zusammengeschweißt wird,
**dadurch gekennzeichnet, dass**
das Verarbeitungsmittel (30) auch dazu ausgebildet ist, zeitgleich während der Induktor (10) das mindestens eine Werkstück (20, 21, 22) durch das erzeugte elektromagnetische Feld auf eine Prozesstemperatur erwärmt, mindestens einen Parameter (P) des mindestens einen Werkstücks (20, 21, 22) zumindest basierend auf dem erzeugten elektromagnetischen Feld zu messen,
eine Änderung des mindestens einen Parameters (P) zu detektieren, und
eine Temperaturschätzung des mindestens einen Werkstücks (20, 21, 22) basierend auf der detektierten Änderung des mindestens einen Parameters (P) zu ermitteln.

2. System nach Anspruch 1, wobei das Verarbeitungsmittel (30) ferner dazu ausgebildet ist, den Betrieb des Systems basierend auf der ermittelten Temperaturschätzung zu steuern.

3. System nach Anspruch 2, wobei die Steuerung des Betriebs des Systems zumindest ein Ändern der angelegten Spannung, ein Ändern der Frequenz und/oder ein Bewirken einer Bewegung des Induktors (10) aufweist.

4. System nach einem der vorhergehenden Ansprüche, wobei das System ferner ein Bewegungsmittel (40) aufweist, das dazu ausgebildet ist, eine Bewegung des Induktors (10) zu bewirken, und wobei das Verarbeitungsmittel (30) ferner dazu ausgebildet ist, die Bewegung des Induktors (10) zu steuern.

5. System nach einem der vorhergehenden Ansprüche, ferner aufweisend ein Druckmittel (50), das dazu ausgebildet ist, einen Druck an das System anzulegen, und wobei das Verarbeitungsmittel (30) ferner dazu ausgebildet ist, den angelegten Druck zu steuern.

6. System nach einem der vorhergehenden Ansprüche, wobei das Verarbeitungsmittel (30) dazu ausgebildet ist, die Temperaturabschätzung zu ermitteln unter:
Verwendung mindestens eines neuronalen Netzwerks, das mit dem mindestens einen Parameter (P) gespeist wird,
und/oder
Verwendung mindestens eines Übertragungsfunktionsmodells, das durch den mindestens einen Parameter (P) gespeist wird, und/oder
Verwendung mindestens eines autoregressiven Modells, das mit mindestens zwei Parametern (P) gespeist wird.

7. System nach einem der vorhergehenden Ansprüche, wobei das Verarbeitungsmittel (30) in operativer Verbindung mit dem Induktor (10) steht

8. System nach einem der vorhergehenden Ansprüche, wobei das Verarbeitungsmittel (30) einen Frequenzwandler (31) aufweist.

9. System nach einem der vorhergehenden Ansprüche, wobei das Verarbeitungsmittel (30) ferner dazu ausgebildet ist, eine Spannung/einen Strom mit einer bestimmten Frequenz an den Induktor (10) zu liefern.

10. System nach einem der vorhergehenden Ansprüche, wobei der mindestens eine von dem Verarbeitungsmittel (30) gemessene Parameter (P) mindestens eines aus einer Frequenz, einem Phasenwinkel, einem Tastverhältnis, einem Widerstand, einer Induktivität, einem Spitzen-, Mittel- oder Effektivwert (RMS) eines Stroms, einer Leistung und/oder Energie ist.

11. System nach einem der vorhergehenden Ansprüche, wobei der Induktor (10) eine einzige Spule aufweist.

12. System nach einem der Ansprüche 1-10, wobei der Induktor (10) eine Vielzahl von Spulen aufweist, die elektromagnetisch miteinander gekoppelt sind.

13. Verfahren (100) zum Induktionsschweißen von mindestens zwei Flächen von mindestens einem Werkstück (20, 21, 22)'unter Verwendung des in einem der vorhergehenden Ansprüche definierten Systems, aufweisend die Schritte:
Bereitstellen (105) eines Induktors (10), der dazu ausgebildet ist, in Verbindung mit dem mindestens einen Werkstück (20, 21, 22) derart angeordnet zu sein, dass der Induktor (10) elektromagnetisch mit mindestens einem Werkstück (20, 21, 22) gekoppelt ist,
Bereitstellen (110) eines Verarbeitungsmittels (30),
Erzeugen (115) eines elektromagnetischen Feldes durch Anlegen einer Wechselspannung an den Induktor (10), um mindestens eine der Flächen induktiv derart zu erwärmen, dass der Schweißnahtbereich (A; A1, A2) zusammengeschweißt wird, **dadurch gekennzeichnet, dass**
zeitgleich während der Induktor (10) das mindestens eine Werkstück (20, 21, 22) durch das erzeugte elektromagnetische Feld auf eine Prozesstemperatur erwärmt, Messen (120) einer Änderung mindestens eines Parameters (P) des mindestens einen Werkstücks (20, 21, 22) zumindest basierend auf dem erzeugten elektromagnetischen Feld,
Detektieren einer Änderung des mindestens einen Parameters (P), und Ermitteln einer Temperaturabschätzung des mindestens einen Werkstücks (20, 21, 22) basierend auf der detektierten Änderung,
wobei das mindestens eine Werkstück (20, 21, 22) aus einem Kohlefaserverbundwerkstoff oder carbonfaserverstärktem Kunststoff (CFK) ist

## Revendications

1. Système pour le soudage par induction contrôlé d'au moins une zone de cordon de soudure (A) d'au moins deux surfaces d'au moins une pièce (20, 21, 22) composée d'un matériau composite de fibres de carbone ou de plastique renforcé de fibres de carbone (CFRP), le système comprenant :
un inducteur (10) configuré pour être agencé en conjonction avec l'au moins une pièce (20, 21, 22) de sorte que l'inducteur (10) soit électromagnétiquement couplé à l'au moins une pièce (20, 21, 22),
un moyen de traitement (30) configuré pour :
générer un champ électromagnétique en appliquant une tension alternative à l'inducteur (10) de manière à chauffer par induction au moins une des surfaces de sorte que la zone de cordon de soudure (A ; A1, A2) soit soudée ensemble, **caractérisé en ce que** le moyen de traitement (30) est également configuré pour, simultanément avec le chauffage par l'inducteur (10) de l'au moins une pièce (20, 21, 22) à une température de traitement par le biais du champ électromagnétique généré, mesurer au moins un paramètre (P) de l'au moins une pièce (20, 21, 22) au moins sur la base du champ électromagnétique généré,
détecter un changement de l'au moins un paramètre (P), et
déterminer une estimation de température de l'au moins une pièce (20, 21, 22) sur la base dudit changement détecté de l'au moins un paramètre (P).

2. Système selon la revendication 1, dans lequel le moyen de traitement (30) est en outre configuré pour commander, sur la base de ladite estimation de température déterminée, le fonctionnement du système.

3. Système selon la revendication 2, dans lequel la commande du fonctionnement du système comprend au moins la modification de la tension appliquée, la modification de la fréquence et/ou la provocation d'un mouvement de l'inducteur (10).

4. Système selon des quelconques revendications précédentes, dans lequel le système comprend en outre un moyen de mouvement (40) configuré pour provoquer un mouvement de l'inducteur (10), et dans lequel le moyen de traitement (30) est en outre configuré pour commander le mouvement de l'inducteur (10).

5. Système selon des quelconques revendications précédentes, comprenant en outre un moyen de pression (50) configuré pour appliquer une pression sur le système, et dans lequel le moyen de traitement (30) est en outre configuré pour commander la pression appliquée.

6. Système selon des quelconques revendications précédentes, dans lequel le moyen de traitement (30) est configuré pour déterminer l'estimation de température par :
l'utilisation d'au moins un réseau neuronal qui est alimenté par l'au moins un paramètre (P), et/ou
l'utilisation d'au moins un modèle de fonction de transfert alimenté par l'au moins un paramètre (P), et/ou
l'utilisation d'au moins un modèle autorégressif alimenté avec au moins deux paramètres (P).

7. Système selon des quelconques revendications précédentes, dans lequel le moyen de traitement (30) est en communication fonctionnelle avec l'inducteur (10).

8. Système selon des quelconques revendications précédentes, dans lequel le moyen de traitement (30) comprend un convertisseur de fréquence (31).

9. Système selon des quelconques revendications précédentes, dans lequel le moyen de traitement (30) est en outre configuré pour fournir une tension/un courant à une certaine fréquence à l'inducteur (10).

10. Système selon des quelconques revendications précédentes, dans lequel l'au moins un paramètre (P) mesuré par le moyen de traitement (30) est au moins l'un d'une fréquence, d'un angle de phase, d'un cycle de service, d'une résistance, d'une inductance, d'un pic, d'une moyenne ou d'une valeur quadratique moyenne (RMS) d'un courant, d'une puissance et/ou d'une énergie.

11. Système selon des quelconques revendications précédentes, dans lequel l'inducteur (10) comprend une unique bobine.

12. Système selon l'une quelconque des revendications 1-10, dans lequel l'inducteur (10) comprend une pluralité de bobines électromagnétiquement couplées les unes aux autres.

13. Procédé (100) pour le soudage par induction d'au moins deux surfaces d'au moins une pièce (20, 21, 22) au moyen du système tel qu'il est défini dans l'une quelconque des revendications précédentes, comprenant les étapes de :
fourniture (105) d'un inducteur (10) configuré pour être agencé en conjonction avec l'au moins une pièce (20, 21, 22) de sorte que l'inducteur (10) soit électromagnétiquement couplé à l'au moins une pièce (20, 21, 22),
fourniture (110) d'un moyen de traitement (30),
génération (115) d'un champ électromagnétique par l'application d'une tension alternative à l'inducteur (10) de manière à chauffer par induction au moins une des surfaces de sorte que la zone de cordon de soudure (A ; A1, A2) soit soudée ensemble, et, **caractérisé en ce que**
simultanément avec le chauffage par l'inducteur (10) de l'au moins une pièce (20, 21, 22) à une température de traitement par le biais du champ électromagnétique généré, mesure (120) d'un changement d'au moins un paramètre (P) de l'au moins une pièce (20, 21, 22) au moins sur la base du champ électromagnétique généré,
détection d'un changement de l'au moins un paramètre (P), et
détermination d'une estimation de température de l'au moins une pièce (20, 21, 22) sur la base dudit changement détecté,
dans lequel l'au moins une pièce (20, 21, 22) est composée d'un matériau composite de fibres de carbone ou de plastique renforcé de fibres de carbone (CFRP).
